# EUROPÄISCHE PATENTSCHRIFT

(11) **EP 4 540 104 B1**
(45) Veröffentlichungstag und Bekanntmachung des Hinweises auf die Patenterteilung: **01.07.2026**
(21) Anmeldenummer: 24709682.9
(22) Anmeldetag: 04.03.2024
(51) Int. Cl.: B60R 16/02, F02M 35/10, F16L 11/15, F16L 5/00, F16L 7/00

(54) **FALTENBALGTÜLLE**
A BELLOW FORMED GROMMET
PASSE FIL EN FORME DE SOUFFLET

(30) Priorität: 13.03.2023 DE 102023000946
(43) Veröffentlichungstag der Anmeldung: 23.04.2025
(73) Patentinhaber: Mercedes-Benz Group AG, 70372 Stuttgart (DE)
(72) Erfinder: QUINTUS, Marcel, 72202 Nagold (DE)
(74) Vertreter: Novagraaf Group
(86) Internationale Anmeldenummer: PCT/EP2024/055608
(87) Internationale Veröffentlichungsnummer: WO 2024/188696

(56) Entgegenhaltungen:
- WO-A1-2015/053197
- DE-A1- 102018 213 095

## Beschreibung

Die Erfindung betrifft eine Faltenbalgtülle zur Durchführung von Leitungen, insbesondere in oder bei einem Kraftfahrzeug. Die Erfindung betrifft außerdem ein mit wenigstens einer solchen Faltenbalgtülle ausgestattetes Kraftfahrzeug.

Eine Tülle dient zur Durchführung von Leitungen, insbesondere von elektrischen Kabeln, und kann beispielsweise bei Kraftfahrzeugen zum Einsatz kommen. Die Tülle kann hierbei in eine Wandöffnung einer Wand eingesetzt werden, die zwei Räume voneinander trennt. Die Leitungen sind in der Tülle einerseits vor einem abrasiven Kontakt mit einem die Wandöffnung einfassenden Öffnungsrand geschützt und sind andererseits in der Tülle positioniert bzw. gehalten. Hierzu ist die Tülle üblicherweise mit einem Rohrkörper ausgestattet, durch den die Leitungen hindurchgeführt werden. Derartige Tüllen sind beispielsweise bekannt aus der DE 20 2021 106 545 U1, aus der DE 10 2010 039 225 A1 und aus der WO 2017/067981 A1 bekannt.

Ein Faltenbalg besteht aus einem elastischen Kunststoff und weist eine Vielzahl von Ringfalten auf, die in einer Längsrichtung des Faltenbalgs aufeinanderfolgen und in einer Umfangsrichtung des Faltenbalgs umlaufen. Ein derartiger Faltenbalg zeichnet sich durch eine hohe Elastizität aus, sodass er beispielsweise in der Längsrichtung elastisch gestaucht und elastisch auseinandergezogen werden kann. Ebenso lässt sich der Faltenbalg elastisch biegen, sodass seine Längsrichtung gekrümmt wird. Ein Faltenbalg ist beispielsweise aus der DE 20 2018 100 751 U1 bekannt.

Aus der DE 10 2005 062 949 A1 ist eine Dichtungsanordnung bekannt, die einen Dichtungshauptkörper aufweist, der aus einem Teleskopbalgteil, einem Manschettenteil, das an dem einen Längsende des Teleskopbalgteils ausgebildet ist, und einem Topfteil gebildet ist, das an dem anderen Längsende des Teleskopbalgteils ausgebildet ist. Im eingebauten Zustand ist das Manschettenteil in eine Öffnung einer ersten Wand eingesetzt, während das Topfteil in eine Öffnung einer zweiten Wand eingesetzt ist, wobei das Teleskopbalgteil einen Abstand zwischen den beiden Wänden überbrückt. Durch diesen Dichtungshauptkörper sind elektrische Kabel hindurchgeführt.

Aus der US 2013/0 160 236 A1 ist ein Faltenbalg bekannt, der an seinen Längsenden jeweils als Tülle ausgestaltet ist. Im eingebauten Zustand ist die eine Tülle in eine Öffnung einer ersten Wand eingesetzt, während die andere Tülle in eine Öffnung einer zweiten Wand eingesetzt ist, wobei der Faltenbalg einen Abstand zwischen den beiden Wänden überbrückt.

Die WO2015/053197 A1 beschreibt ein Wellrohr, das den Durchgang eines Kabels ermöglicht, das einen dicken Abschnitt aufweist, der kein Abschnitt des Kabels ist, der geschützt werden soll, und das verhindert, dass das Kabel freiliegt und nach außen ragt. Um dieses Ziel zu erreichen, weist dieses Wellrohr eine Balgstruktur auf, die röhrenförmig ohne Schlitze in Umfangsrichtung geformt ist und Rippenteile und Nutteile aufweist, die jeweils entlang der Umfangsrichtung auf der äußeren Umfangsfläche des Rohrs geformt sind und abwechselnd nebeneinander in axialer Richtung angeordnet sind. Das Wellrohr ist mit einem Durchmessererweiterungsteil versehen, das sich in axialer Richtung über einen Umfangsabschnitt jedes der Rippenteile und jedes der Nutteile erstreckt und das zur Innenumfangsseite oder Außenumfangsseite der Rippenteile und der Nutteile bewegt werden kann, so dass sich entsprechende Rippenteile und entsprechende Nutteile, die sich auf gegenüberliegenden Umfangsseiten voneinander befinden, schließen.

Die DE 10 2018 213 095 A1 beschreibt einen Kabelbaum, welcher enthält: einen Drahtabschnitt, der eine Vielzahl von Elektrodrähte aufweist, die in der gleichen Richtung gebündelt sind; und ein Abschirmelement, das einen Außenumfang des Drahtabschnitts gesamt umgibt. Das Abschirmelement ist angeordnet, um zwischen benachbarten Elektrodrähten der Vielzahl von Elektrodrähten in dem Drahtabschnitt angeordnet zu sein. Die benachbarten Elektrodrähte in dem Drahtabschnitt sind in einem vorbestimmten Abschnitt angeordnet, so dass ein vorbestimmter Wert der elektrostatischen Kapazität zwischen den Elektrodrähten hergestellt ist.

Bei einer Faltenbalgtülle wird der für die Durchführung der Leitungen vorgesehene Rohrkörper als Faltenbalg ausgestaltet. Dabei definieren die Ringfalten mit ihren freien Innenquerschnitten den Innenquerschnitt des Rohrkörpers bzw. des Faltenbalgs. Bei optimaler Auslegung ist die Faltenbalgtülle so dimensioniert, dass sich im fertig montierten Zustand eine dichte Packung für die durch den Rohrkörper hindurchgeführten Leitungen ergibt.

Eine solche dichte Packung ist jedoch nur möglich, wenn die Leitungen an dem Ende, das durch den Rohrkörper hindurchgeführt werden soll, kein den Querschnitt der Leitung vergrößerndes Verbindungselement aufweisen. Gerade bei elektrischen Leitungen oder Kabeln, insbesondere bei einem Kabelbaum, kann es jedoch erhebliche Montagevorteile mit sich bringen, wenn die Kabel vor dem Durchführen durch die Tülle bereits mit Verbindungselementen ausgestattet werden können und teilweise bereits miteinander verbunden werden können, beispielsweise um Kabelstränge auszubilden, die gemeinsam durch die Tülle hindurchgeführt werden.

Die vorliegende Erfindung beschäftigt sich mit dem Problem, für eine Faltenbalgtülle der vorstehend beschriebenen Art eine verbesserte oder zumindest eine andere Ausführungsform anzugeben, die sich insbesondere dadurch auszeichnet, dass das Durchführen von Leitungen vereinfacht ist. Insbesondere soll es auch möglich sein, Leitungen mit Verbindungselementen durch die Faltenbalgtülle hindurchzuführen.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den als Faltenbalg ausgestalteten Rohrkörper außerdem mit wenigstens einer Längsfalte auszustatten, die am Rohrkörper radial nach innen vorsteht und die sich in der Längsrichtung des Rohrkörpers über mehrere Ringfalten oder über alle Ringfalten erstreckt. Des Weiteren ist diese Längsfalte so konfiguriert, dass sich der Rohrkörper elastisch aufweiten, also hinsichtlich seines Querschnitts vergrößern lässt, derart, dass sich der zum Durchführen der Leitungen zur Verfügung stehende freie Innenquerschnitt vergrößert, was das Durchführen von Leitungen mit oder ohne Verbindungselementen erleichtert. Da die Aufweitung elastisch erfolgt, kann der Rohrkörper nach dem Durchführen der Leitungen wieder einen Ausgangszustand einnehmen, in dem er einen entsprechend reduzierten Innenquerschnitt besitzt.

Im vorliegenden Zusammenhang ist eine "Konfiguration" gleichbedeutend mit einer "Ausgestaltung", sodass die Formulierung "so konfiguriert, dass" gleichbedeutend ist mit der Formulierung "so ausgestaltet, dass".

Im Einzelnen wird hierzu vorgeschlagen, dass die jeweilige Längsfalte in der jeweiligen Ringfalte zwei in der Umfangsrichtung des Rohrkörpers benachbarte Ringfaltenabschnitte elastisch miteinander verbindet, derart, dass die jeweilige Ringfalte zwischen einem Ausgangszustand, in dem die jeweilige Ringfalte einen ersten Innenquerschnitte aufweist, und einem Verformungszustand elastisch verformbar ist, in dem die jeweilige Ringfalte einen zweiten Innenquerschnitte aufweist, der größer ist als der erste Innenquerschnitte. Da sich die jeweilige Längsfalte über mehrere benachbarte Ringfalten und vorzugsweise über sämtliche Ringfalten erstreckt, lässt sich der Rohrkörper entlang dieser Ringfalten hinsichtlich seines Innenquerschnitts elastisch aufweiten. Dies kann global, also über alle Ringfalten, die mithilfe der jeweiligen Längsfalte elastisch aufweitbar sind, gleichzeitig erfolgen oder lokal in einer einzigen Ringfalte oder in mehreren unmittelbar benachbarten Ringfalten erfolgen.

Gemäß einer vorteilhaften Ausführungsform kann die jeweilige Längsfalte im Ausgangszustand in der jeweiligen Ringfalte einen U-förmigen oder V-förmigen Verbindungsbereich ausbilden, der die beiden Ringfaltenabschnitte elastisch miteinander verbindet. Dieser Verbindungsbereich ist außerdem so konfiguriert, dass er im Ausgangszustand radial nach innen vorsteht und für den Verformungszustand elastisch radial nach außen verstellbar ist. Durch das Verstellen des Verbindungsbereichs radial nach außen vergrößert sich der freie Innenquerschnitt der jeweiligen Ringfalte. Es ist klar, dass der Verbindungsbereich im Ausgangszustand entlang der jeweilige Ringfalte vorzugsweise abgerundet verläuft und dabei möglichst große Radien aufweist, um Spannungsspitzen im Verformungszustand zu vermeiden bzw. zu reduzieren.

Grundsätzlich können am Rohrkörper auch zwei oder mehr derartige Längsfalten ausgebildet sein, die in der Umfangsrichtung möglichst gleichförmig verteilt angeordnet sind. Besonders vorteilhaft ist dabei die Ausführungsform der Erfindung, bei der am Rohrkörper genau zwei derartige Längsfalten ausgebildet sind, die einander diametral gegenüberliegen. Die beiden Längsfalten sind dabei so konfiguriert, dass sie im Ausgangszustand den jeweiligen ersten Innenquerschnitt in zwei parallele Leitungsbereiche zum separaten Durchführen und/oder separaten Anordnen und/oder Aufnehmen von Leitungen unterteilen und dass sie im Verformungszustand den jeweiligen zweiten Innenquerschnitt als einheitlichen Durchführbereich zum gemeinsamen Durchführen von Leitungen für beide Leitungsbereiche ausbilden. Hierdurch wird erreicht, dass die durch den Rohrkörper hindurchgeführten Leitungen im Ausgangszustand in den beiden Leitungsbereichen vergleichsweise dicht gepackt werden können, was für die Leitungen einen verbesserten Halt innerhalb der Faltenbalgtülle ermöglicht. Im Verformungszustand wird dagegen ein gemeinsamer Durchführbereich geschaffen, der sich durch einen deutlich vergrößerten Innenquerschnitt auszeichnet, sodass auch Leitungen mit Verbindungselementen durch den Durchführbereich hindurchführbar sind, die sich durch einen der Leitungsbereiche nicht durchführen lassen. Beispielsweise kann ein Verbindungselement durch den Durchführbereich hindurchgeführt werden, dessen Außenquerschnitt größer ist als der freie Innenquerschnitt des jeweiligen Leitungsbereichs.

Zweckmäßig sind die beiden Längsfalten identisch konfiguriert, sodass insbesondere auch die beiden Leitungsbereiche im Ausgangszustand identische Innenquerschnitte besitzen.

Zweckmäßig erstreckt sich die jeweilige Längsfalte über alle Ringfalten. Damit kann eine Überdehnung einer Ringfalte, insbesondere am Längsende des jeweiligen Rohrkörpers, vermieden werden.

Bevorzugt ist ferner eine Ausführungsform, bei der alle Ringfalten im Ausgangszustand den gleichen ersten Innenquerschnitt aufweisen. Zusätzlich kann außerdem vorgesehen sein, dass alle Ringfalten für den Verformungszustand auf den gleichen zweiten Innenquerschnitt elastisch aufweitbar sind. Dies vereinfacht die Durchführung der Leitungen mit oder ohne Verbindungselementen.

Gemäß einer vorteilhaften Ausführungsform können sich die Ringfalten von einem ersten Längsende des Rohrkörpers bis zu einem zweiten Längsende des Rohrkörpers erstrecken, sodass die Innenquerschnitte der Ringfalten den Innenquerschnitt des Rohrkörpers definieren. Ferner kann vorgesehen sein, dass sich die jeweilige Längsfalte vom ersten Längsende bis zum zweiten Längsende erstreckt, sodass der Rohrkörper über seine gesamte Länge durch elastisches Verformen der Ringfalten zwischen dem Ausgangszustand und dem Verformungszustand hinsichtlich seines Innenquerschnitts elastisch verformbar bzw. aufweitbar ist. Damit lassen sich die Leitungen mit oder ohne Verbindungselementen durch den gesamten Rohrkörper einfach hindurchführen.

Gemäß einer vorteilhaften Ausführungsform kann die Faltenbalgtülle einen ersten Flansch aufweisen, der mit einem elastisch verformbaren ersten Übergangsbereich mit einem ersten Längsende des Rohrkörpers fest verbunden ist, sodass Leitungen durch den ersten Flansch und durch den ersten Übergangsbereich hindurchführbar sind. Der erste Flansch kann beispielsweise zum Anbringen der Faltenbalgtülle an einer ersten Wand genutzt werden. Der elastisch verformbare erste Übergangsbereich ermöglicht dabei die elastische Verformung des als Faltenbalg ausgestalteten Rohrkörpers im Bereich des ersten Längsendes des Rohrkörpers.

Zweckmäßig kann die Faltenbalgtülle außerdem einen zweiten Flansch aufweisen, der mit einem elastisch verformbaren zweiten Übergangsbereich mit einem zweiten Längsende des Rohrkörpers fest verbunden ist, sodass Leitungen durch den zweiten Flansch und durch den zweiten Übergangsbereich hindurchführbar sind. Mit dem zweiten Flansch lässt sich die Faltenbalgtülle beispielsweise an einer zweiten Wand festlegen. Der elastisch verformbare zweite Übergangsbereich gewährleistet dabei die elastische Verformbarkeit des als Faltenbalg ausgestalteten Rohrkörpers im Bereich des zweiten Längsendes des Rohrkörpers.

Ein erfindungsgemäßes Kraftfahrzeug besitzt einen ersten Raum, der mit einer ersten Wand begrenzt ist, die eine erste Wandöffnung aufweist, sowie einen zweiten Raum, der mit einer zweiten Wand begrenzt ist, die eine zweite Wandöffnung aufweist. Ferner ist am Fahrzeug ein Zwischenraum ausgebildet, der zwischen dem ersten Raum und dem zweiten Raum angeordnet ist und der durch die erste Wand und die zweite Wand begrenzt ist. Das erfindungsgemäße Kraftfahrzeug ist außerdem mit wenigstens einer Faltenbalgtülle der vorstehend beschriebenen Art ausgestattet, die sich durch den Zwischenraum erstreckt und die die erste Wandöffnung mit der zweiten Wandöffnung verbindet. Das Fahrzeug kann nun außerdem mit wenigstens einer Leitung ausgestattet sein, die vom ersten Raum durch die erste Wandöffnung, durch die Faltenbalgtülle, durch die zweite Wandöffnung in den zweiten Raum geführt ist. Zweckmäßig kann es sich bei der jeweiligen Leitung um ein elektrisches Kabel handeln. Ebenso ist denkbar, dass es sich bei der jeweiligen Leitung um eine pneumatische oder hydraulische Leitung handelt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine isometrische Ansicht einer Faltenbalgtülle,
- Figur 2: ein Längsschnitt der Faltenbalgtülle im montierten Zustand,
- Figur 3: eine isometrische Ansicht der Faltenbalgtülle wie in Figur 1 bei unterschiedlichen Zuständen a, b, c beim Durchführen von Leitungen.

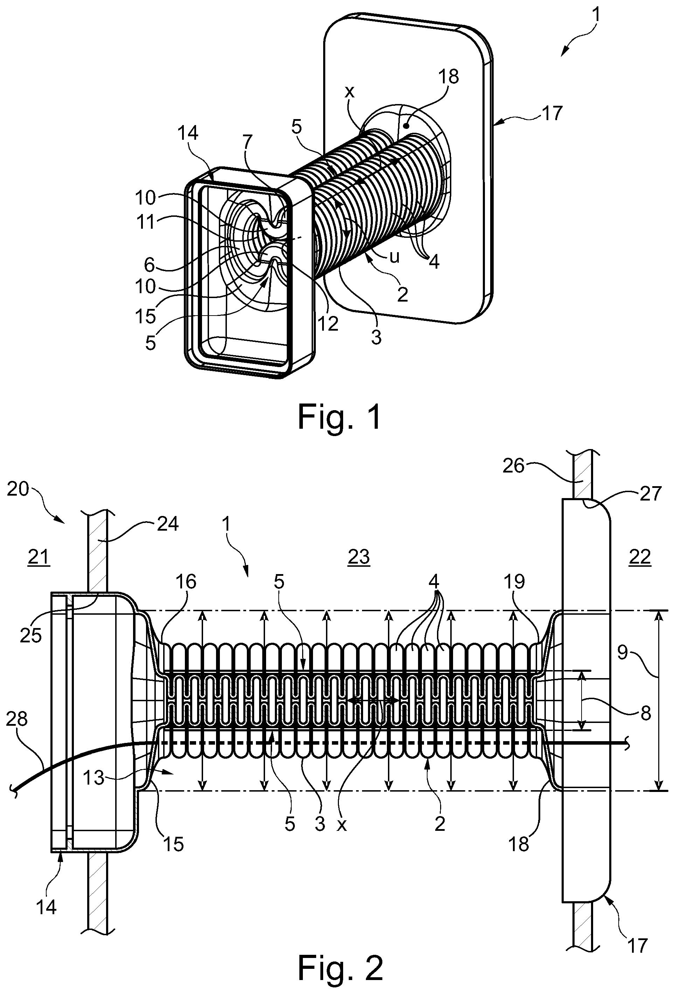

Entsprechend den Figuren 1 bis 3 besitzt eine Faltenbalgtülle 1 einen Rohrkörper 2, der aus einem elastischen Kunststoff besteht und der als Faltenbalg 3 ausgestaltet ist. In der Folge besitzt der Rohrkörper 2 eine Vielzahl von Ringfalten 4, die jeweils in einer Umfangsrichtung U des Rohrkörpers 2 umlaufen und in einer Längsrichtung X des Rohrkörpers 2 aufeinanderfolgen. Der Rohrkörper 2 ist außerdem mit wenigstens einer Längsfalte 5 ausgestattet, die radial nach innen vorsteht und sich dabei in der Längsrichtung X des Rohrkörpers 2 über mehrere Ringfalten 4 erstreckt. Im gezeigten Beispiel sind genau zwei derartige Längsfalten 5 vorgesehen, die sich am Rohrkörper 2 diametral gegenüberliegen. Ferner ist im gezeigten Beispiel vorgesehen, dass sich die jeweilige Längsfalte 5 über alle Ringfalten 4 erstreckt.

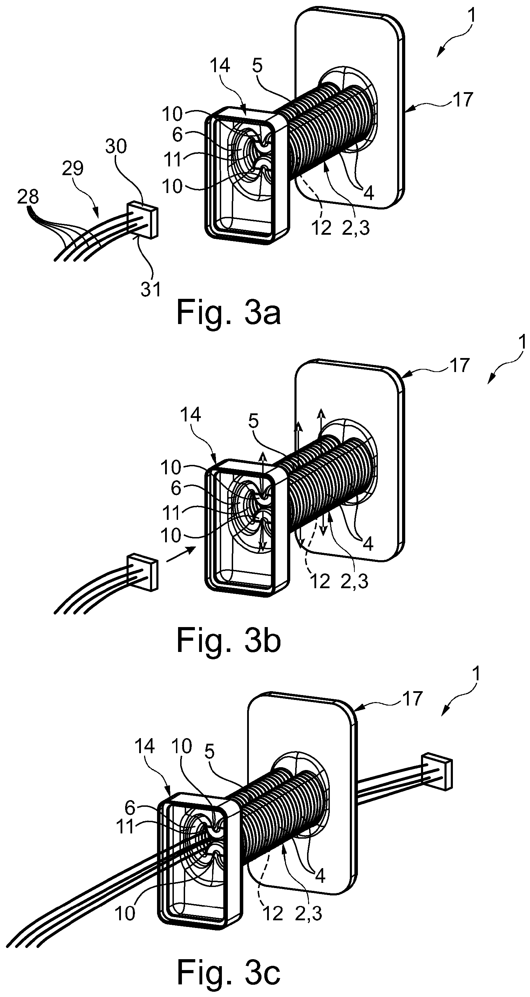

Die jeweilige Längsfalte 5 ist so konfiguriert, dass sie in der jeweiligen Ringfalte 4 zwei in der Umfangsrichtung U des Rohrkörpers 2 benachbarte Ringfaltenabschnitte 6, 7 elastisch miteinander verbindet. In den Figuren 1 und 2 erstreckt sich der eine oder links liegende Ringfaltenabschnitt 6 von der einen oder oben liegenden Längsfalte 5 zur anderen oder unten liegenden Längsfalte 5. Auch der andere oder rechts liegende Ringfaltenabschnitt 7 erstreckt sich von der einen oder oberen Längsfalte 5 bis zur anderen oder unteren Längsfalte 5. Ferner ist die jeweilige Längsfalte 5 so konfiguriert, dass die jeweilige Ringfalte 4 zwischen einem in den Figuren 1 bis 3 wiedergegebenen Ausgangszustand und einem in den Figuren 2 und 3b durch Pfeile angedeuteten Verformungszustand elastisch verformbar ist. Im Ausgangszustand weist die jeweilige Ringfalte 4, einen in Figur 2 mit durchgezogenen Linien angedeuteten ersten Innenquerschnitte 8 auf. Im Verformungszustand weist die jeweilige Ringfalte 4 dagegen einen in Figur 2 mit strichpunktierten Linien angedeuteten zweiten Innenquerschnitte 9 auf, der deutlich größer ist als der erste Innenquerschnitt 8. Beispielsweise kann die Fläche des zweiten Innenquerschnitts 9 mindestens doppelt so groß sein wie die Fläche des ersten Innenquerschnitts 8.

Wie sich insbesondere den Figuren 1 und 2 entnehmen lässt, bildet die jeweilige Längsfalte 5 im Ausgangszustand in der jeweiligen Ringfalte 4 einen im Wesentlichen U-förmigen oder V-förmigen Verbindungsbereich 10, der die beiden Ringfaltenabschnitte 6, 7, die an die jeweilige Längsfalte 5 angrenzen, elastisch miteinander verbindet. Diese Verbindungsbereich 10 ist nun so konfiguriert, dass er, wie in den Figuren 1 bis 3 erkennbar, im Ausgangszustand radial nach innen vorsteht. Für den Verformungszustand ist der Verbindungsbereich 10 elastisch radial nach außen verstellbar, wodurch sich die signifikante Vergrößerung des Innenquerschnitts vom ersten Innenquerschnitts 8 zum zweiten Innenquerschnitt 9 ergibt.

Sofern wie im gezeigten Beispiel zwei einander diametral gegenüberliegen der Längsfalten 5 vorgesehen sind, können diese zweckmäßig so konfiguriert und aufeinander abgestimmt sein, dass sie im Ausgangszustand den jeweiligen ersten Innenquerschnitt 8 in zwei nebeneinanderliegende und/oder parallele Leitungsbereiche 11 und 12 unterteilen, die in den Figuren 1 und 3 erkennbar sind. Dabei befindet sich der eine Leitungsbereich 11 in den Figuren 1 und 3 links, sodass er von dem einen oder linken Ringfaltenabschnitt 6 in der Umfangsrichtung U weitegehend eingefasst ist, während sich der andere Leitungsbereiche 12 in den Figuren 1 und 3 rechts befindet und vom anderen oder rechten Ringfaltenabschnitt 7 in der Umfangsrichtung U weitgehend eingefasst ist. Die beiden Leitungsbereiche 11, 12 dienen zum separaten Durchführen und/oder zum separaten Aufnehmen von Leitungen. Die beiden Längsfalten 5 sind außerdem so auf einander abgestimmt bzw. konfiguriert, dass sie im Verformungszustand den jeweiligen zweiten Innenquerschnitts 9 als einheitlichen und/oder gemeinsamen Durchführbereich zum gemeinsamen Durchführen von Leitungen für die beiden Leitungsbereiche 11, 12 ausbilden. Der gemeinsame einheitliche Durchführbereich ist in Figur 2 mit 13 bezeichnet.

Beim hier gezeigten Beispiel erstrecken sich die Längsfalten 5 über alle Ringfalten 4. Ferner ist hier vorgesehen, dass alle Ringfalten 4 im Ausgangszustand den gleichen ersten Innenquerschnitte 8 aufweisen und für den Verformungszustand auf den gleichen zweiten Innenquerschnitte 9 elastisch aufweitbar sind. Dementsprechend ist der Rohrkörper 2 hier im Wesentlichen zylindrische konfiguriert. Bei einer anderen Ausführungsform ist grundsätzlich denkbar, den Rohrkörper 2 kegelstumpfförmig auszugestalten, sodass die Ringfalten 4 in der Längsrichtung X des Rohrkörpers 2 einen abnehmenden oder zunehmenden ersten Innenquerschnitt 8 sowie einen abnehmenden oder zunehmenden zweiten Innenquerschnitt 9 aufweisen.

Bei der hier gezeigten zylindrischen Ausgestaltung des Rohrkörpers 2, die sich durch einen konstanten ersten Innenquerschnitt 8 und einen konstanten zweiten Innenquerschnitt 9 über alle Ringfalten 4 auszeichnet, definieren die Innenquerschnitte der Ringfalten 4 den Innenquerschnitt des Rohrkörpers 2, sodass der Rohrkörper 2 über seine gesamte axiale Länge durch elastisches Verformen der Ringfalten 4 zwischen dem Ausgangszustand und dem Verformungszustand hinsichtlich seines Innenquerschnitts elastisch ausgeweitet werden kann.

Beim hier gezeigten Beispiel weist die Faltenbalgtülle 1 außerdem einen ersten Flansch 14 auf, der mit einem elastisch verformbaren ersten Übergangsbereich 15 mit einem ersten Längsende 16 des Rohrkörpers 2 fest verbunden ist. Ferner besitzt die Faltenbalgtülle 1 hier einen zweiten Flansch 17, der mit einem elastisch verformbaren zweiten Übergangsbereich 18 mit einem zweiten Längsende 19 des Rohrkörpers 2 fest verbunden ist. In der Folge lassen sich in den Figuren 2 und 3 gezeigte Leitungen 28 durch den ersten Flansch 14 und durch den ersten Übergangsbereich 15 in den Rohrkörper 2 führen. Ferner lassen sich Leitungen 28 durch den zweiten Flansch 17 und den zweiten Übergangsbereich 18 in den Rohrkörper 2 führen.

Gemäß Figur 2 weist ein hier nur rudimentär dargestelltes Kraftfahrzeug 20 einen ersten Raum 21, einen zweiten Raum 22 und einen Zwischenraum 23 auf. Der erste Raum 21 ist durch eine erste Wand 24 begrenzt, die eine erste Wandöffnung 25 aufweist. Der zweite Raum 22 ist durch eine zweite Wand 26 begrenzt, die eine zweite Wandöffnung 27 aufweist. Der Zwischenraum 23 ist zwischen dem ersten Raum 21 und dem zweiten Raum 22 angeordnet und ist dabei durch die erste Wand 24 und durch die zweite Wand 26 begrenzt. Das Fahrzeug 20 ist außerdem mit einer Faltenbalgtülle 1 ausgestattet, die sich durch den Zwischenraum 23 erstreckt und dabei die erste Wandöffnung 25 mit der zweiten Wandöffnung 27 verbindet. Dabei können die Flansche 14, 17 auf geeignete Weise an die jeweilige Wand 24, 26 angebaut sein und daran befestigt sein. Insbesondere ist der erste Flansch 14 in die erste Wandöffnung 25 eingesetzt, während der zweite Flansch 17 in die zweite Wandöffnung 27 eingesetzt ist. Wenigstens eine Leitung 28 ist im fertig montierten Zustand vom ersten Raum 21 durch die erste Wandöffnung 25, durch die Faltenbalgtülle 1, durch die zweite Wandöffnung 27 in den zweiten Raum 22 geführt. Der erste Raum 21 kann sich beispielsweise in einer Fahrzeugtür befinden, die relativ zu einer Karosserie verstellbar ist, während sich der zweite Raum 22 in der Karosserie befindet.

Die Bestückung der Faltenbalgtülle 1 mit Leitungen 28 wird nachfolgend anhand der Figuren 3a, 3b und 3c erläutert.

Gemäß Figur 3a soll ein Leitungsstrang 29 durch die Faltenbalgtülle 1 hindurchgeführt werden. Der Leitungsstrang 29 weist dabei mehrere Leitungen 28 auf, die an ihren einen Enden mithilfe eines Verbindungselements 30 miteinander verbunden sind. Das Verbindungselement 30 besitzt einen Außenquerschnitt 31, der hier größer ist als der freie Innenquerschnitt des jeweiligen Leitungsbereichs 11 oder 12 im Ausgangszustand der Ringfalten 4 bzw. des Rohrkörpers 2. Vor dem Durchführen des Leitungsstrangs 29 durch die Faltenbalgtülle 1 befindet sich das Verbindungsstück 30 auf der einen, dem Betrachter (männlich/weiblich/divers) zugewandten Seite der Faltenbalgtülle 1, z.B. im ersten Raum 21.

Gemäß Figur 3b werden nun zum Durchführen des Leitungsstrangs 29 die Ringfalten 4 elastisch in den Verformungszustand überführt, um den Durchführbereich 13 zu bilden, dessen freier Innenquerschnitt größer ist als der Außenquerschnitt 31 des Verbindungselements 30. Hierzu ist denkbar, dass beispielsweise mittels eines entsprechenden Werkzeugs sämtliche Ringfalten 4 simultan in den Verformungszustand überführt werden. Ebenso ist denkbar, dass die Ringfalten 4 sukzessive in der Durchführrichtung des Leitungsstrang 29 nacheinander in den Verformungszustand überführt werden. Dies kann manuell durch einen Werker (männlich/weiblich/divers) oder durch ein Werkzeug oder eine Maschine erfolgen. Ebenso ist die Verwendung eines Hilfswerkzeugs denkbar, das zunächst entgegen der Durchführrichtung durch den Rohrkörper 2 hindurchgeführt wird, wobei das Hilfswerkzeug dabei die Ringfalten 4 in den Verformungszustand überführt. Der Leitungsstrang 29 kann dann mit dem durch die Faltenbalgtülle 1 hindurchgeführten Hilfswerkzeug verbunden werden. Anschließend kann das Hilfswerkzeug dann zusammen mit dem Leitungsstrang 29 in der Durchführrichtung durch die Faltenbalgtülle 1 zurückgezogen werden. In der Folge werden die Ringfalten 4 wieder sukzessive in ihren Ausgangszustand überführt. Die Durchführung des Leitungsstrangs 29 und die hierbei erfolgende Verformung der Ringfalten 4 in deren Verformungszustand ist in Figur 3b durch Pfeile angedeutet.

Gemäß Figur 3c erstrecken sich die Leitungen 28 nach dem Durchführen des Leitungsstrangs 29 in dem einen Leitungsbereich 11. Das Verbindungselement 30 befindet sich nun auf der anderen, vom Betrachter abgewandten Seite der Faltenbalgtülle 1, z.B. im zweiten Raum 22.

## Patentansprüche

1. Faltenbalgtülle (1) zur Durchführung von Leitungen (28) bei einem Kraftfahrzeug (20),
- mit einem als Faltenbalg (3) ausgestalteten Rohrkörper (2) aus einem elastischen Kunststoff,
- wobei der Rohrkörper (2) eine Vielzahl von Ringfalten (4) aufweist, die jeweils in einer Umfangsrichtung (U) des Rohrkörpers (2) umlaufen und die in einer Längsrichtung (X) des Rohrkörpers (2) aufeinanderfolgen,
- wobei der Rohrkörper (2) wenigstens eine radial nach innen vorstehende Längsfalte (5) aufweist, die sich in der Längsrichtung (X) des Rohrkörpers (2) über mehrere oder alle Ringfalten (4) erstreckt,
**dadurch gekennzeichnet,**
- **dass** der Rohrkörper (2) zwei derartige Längsfalten (5) aufweist, die einander diametral gegenüberliegen,
- **dass** die jeweilige Längsfalte (5) so konfiguriert ist, dass sie in der jeweiligen Ringfalte (4) zwei in der Umfangsrichtung (U) des Rohrkörpers (2) benachbarte Ringfaltenabschnitte (6, 7) elastisch miteinander verbindet, derart, dass sich die beiden Ringfaltenabschnitte (6, 7) jeweils von der einen Längsfalte (5) zur anderen Längsfalte (5) erstrecken und die jeweilige Ringfalte (4) zwischen einem Ausgangszustand, in dem die jeweilige Ringfalte (4) einen ersten Innenquerschnitt (8) aufweist, und einem Verformungszustand elastisch verformbar ist, in dem die jeweilige Ringfalte (4) einen zweiten Innenquerschnitt (9) aufweist, der größer ist als der erste Innenquerschnitt (8).

2. Faltenbalgtülle (1) nach Anspruch 1,
**dadurch gekennzeichnet,**
- **dass** die jeweilige Längsfalte (5) im Ausgangszustand in der jeweiligen Ringfalte (4) einen U-förmigen oder V-förmigen Verbindungsbereich (10) ausbildet, der die beiden Ringfaltenabschnitte (6, 7) elastisch miteinander verbindet,
- **dass** der Verbindungsbereich (10) so konfiguriert ist, dass er im Ausgangszustand radial nach innen vorsteht und für den Verformungszustand elastisch radial nach außen verstellbar ist.

3. Faltenbalgtülle (1) nach Anspruch 1 oder 2,
**dadurch gekennzeichnet,**
- **dass** die beiden Längsfalten (5) so konfiguriert sind, dass sie im Ausgangszustand den jeweiligen ersten Innenquerschnitt (8) in zwei parallele Leitungsbereiche (11, 12) zum separaten Durchführen und/oder Aufnehmen von Leitungen (28) unterteilen und dass sie im Verformungszustand den jeweiligen zweiten Innenquerschnitt (9) als einheitlichen Durchführbereich (13) zum gemeinsamen Durchführen von Leitungen (28) für beide Leitungsbereiche (11, 12) ausbilden.

4. Faltenbalgtülle (1) nach einem der vorhergehenden Ansprüche,
**dadurch gekennzeichnet,**
- **dass** sich die jeweilige Längsfalte (5) über alle Ringfalten (4) erstreckt.

5. Faltenbalgtülle (1) nach einem der vorhergehenden Ansprüche,
**dadurch gekennzeichnet,**
- **dass** alle Ringfalten (4) im Ausgangszustand den gleichen ersten Innenquerschnitt (8) aufweisen,
- **dass** alle Ringfalten (4) für den Verformungszustand auf den gleichen zweiten Innenquerschnitt (9) elastisch aufweitbar sind.

6. Faltenbalgtülle (1) nach einem der vorhergehenden Ansprüche,
**dadurch gekennzeichnet,**
- **dass** sich die Ringfalten (4) von einem ersten Längsende (16) des Rohrkörpers (2) bis zu einem zweiten Längsende (19) des Rohrkörpers (2) erstrecken, so dass die Innenquerschnitte (8) der Ringfalten (4) den Innenquerschnitt des Rohrkörpers (2) definieren,
- **dass** sich die jeweilige Längsfalte (5) vom ersten Längsende (16) bis zum zweiten Längsende (19) erstreckt, so dass der Rohrkörper (2) über seine gesamte Länge durch elastisches Verformen der Ringfalten (4) zwischen dem Ausgangszustand und dem Verformungszustand hinsichtlich seines Innenquerschnitts elastisch aufweitbar ist.

7. Faltenbalgtülle (1) nach einem der vorhergehenden Ansprüche,
**dadurch gekennzeichnet,**
- **dass** die Faltenbalgtülle (1) einen ersten Flansch (14) aufweist, der mit einem elastisch verformbaren ersten Übergangsbereich (15) mit einem ersten Längsende (16) des Rohrkörpers (2) fest verbunden ist, so dass Leitungen (28) durch den ersten Flansch (14) und durch den ersten Übergangsbereich (15) hindurchführbar sind.

8. Faltenbalgtülle (1) nach Anspruch 7,
**dadurch gekennzeichnet,**
- **dass** die Faltenbalgtülle (1) einen zweiten Flansch (17) aufweist, der mit einem elastisch verformbaren zweiten Übergangsbereich (18) mit einem zweiten Längsende (19) des Rohrkörpers (2) fest verbunden ist, so dass Leitungen (28) durch den zweiten Flansch (17) und durch den zweiten Übergangsbereich (18) hindurchführbar sind.

9. Kraftfahrzeug (20),
- mit einem ersten Raum (21), der mit einer ersten Wand (24) begrenzt ist, die eine erste Wandöffnung (25) aufweist,
- mit einem zweiten Raum (22), der mit einer zweiten Wand (26) begrenzt ist, die eine zweite Wandöffnung (27) aufweist,
- mit einem Zwischenraum (23), der zwischen dem ersten Raum (21) und dem zweiten Raum (22) angeordnet ist und der durch die erste Wand (24) und die zweite Wand (26) begrenzt ist,
- mit einer Faltenbalgtülle (1) nach einem der vorhergehenden Ansprüche, die sich durch den Zwischenraum (23) erstreckt und die die erste Wandöffnung (25) mit der zweiten Wandöffnung (27) verbindet,
- wobei wenigstens eine Leitung (28) vom ersten Raum (21) durch die Faltenbalgtülle (1) in den zweiten Raum (22) geführt ist.

10. Kraftfahrzeug (20) nach Anspruch 9,
**dadurch gekennzeichnet,**
- **dass** die jeweilige Leitung (28) ein elektrisches Kabel ist.

## Claims

1. Bellows grommet (1) for leading through lines (28) in a motor vehicle (20),
- comprising a tube body (2) designed as a bellows (3) and made of elastic plastics material,
- wherein the tube body (2) has a plurality of annular folds (4) which each extend around the tube body (2) in a circumferential direction (U) thereof and which succeed one another in a longitudinal direction (X) of the tube body (2),
- wherein the tube body (2) has at least one radially inwardly projecting longitudinal fold (5) which extends in the longitudinal direction (X) of the tube body (2) along a plurality of or all annular folds (4),
**characterized**
- **in that** the tube body (2) has two such longitudinal folds (5) which are diametrically opposite each other,
- **in that** the relevant longitudinal fold (5) is designed such that it elastically connects two annular fold portions (6, 7), which are adjacent to one another in the circumferential direction (U) of the tube body (2), to one another in the relevant annular fold (4), such that the two annular fold portions (6, 7) each extend from the one longitudinal fold (5) to the other longitudinal fold (5) and the relevant annular fold (4) is elastically deformable between an initial state, in which the relevant annular fold (4) has a first inner cross section (8), and a deformation state, in which the relevant annular fold (4) has a second inner cross section (9) which is larger than the first inner cross section (8).

2. Bellows grommet (1) according to claim 1,
**characterized**
- **in that** the relevant longitudinal fold (5) in the initial state forms a U-shaped or V-shaped connecting region (10) in the relevant annular fold (4), which connecting region elastically connects the two annular fold portions (6, 7) to one another,
- **in that** the connecting region (10) is designed such that it projects radially inward in the initial state and is elastically movable radially outward for the deformation state.

3. Bellows grommet (1) according to claim 1 or 2,
**characterized**
- **in that** the two longitudinal folds (5) are designed such that, in the initial state, the longitudinal folds divide the relevant first inner cross section (8) into two parallel line regions (11, 12) for separately leading through and/or receiving lines (28) and that, in the deformation state, the longitudinal folds form the relevant second inner cross section (9) as a single lead-through region (13) for leading through lines (28) together for both line regions (11, 12).

4. Bellows grommet (1) according to any of the preceding claims,
**characterized**
- **in that** the relevant longitudinal fold (5) extends along all annular folds (4).

5. Bellows grommet (1) according to any of the preceding claims,
**characterized**
- **in that** all annular folds (4) in the initial state have the same first inner cross section (8),
- **in that** all annular folds (4) are elastically expandable to the same second inner cross section (9) for the deformation state.

6. Bellows grommet (1) according to any of the preceding claims,
**characterized**
- **in that** the annular folds (4) extend from a first longitudinal end (16) of the tube body (2) to a second longitudinal end (19) of the tube body (2), such that the inner cross sections (8) of the annular folds (4) define the inner cross section of the tube body (2),
- **in that** the relevant longitudinal fold (5) extends from the first longitudinal end (16) to the second longitudinal end (19), so that the tube body (2) can be elastically expanded with respect to the internal cross section of the tube body along the entire length thereof by elastic deformation of the annular folds (4) between the initial state and the deformation state.

7. Bellows grommet (1) according to any of the preceding claims,
**characterized**
- **in that** the bellows grommet (1) has a first flange (14) which is fixedly connected to a first longitudinal end (16) of the tube body (2) by an elastically deformable first transition region (15), so that lines (28) can be led through the first flange (14) and through the first transition region (15).

8. Bellows grommet (1) according to claim 7,
**characterized**
- **in that** the bellows grommet (1) has a second flange (17) which is fixedly connected to a second longitudinal end (19) of the tube body (2) by an elastically deformable second transition region (18), so that lines (28) can be led through the second flange (17) and through the second transition region (18).

9. Motor vehicle (20),
- comprising a first space (21) which is delimited by a first wall (24) which has a first wall opening (25),
- comprising a second space (22) which is delimited by a second wall (26) which has a second wall opening (27),
- comprising an intermediate space (23) which is arranged between the first space (21) and the second space (22) and which is delimited by the first wall (24) and the second wall (26),
- comprising a bellows grommet (1) according to any of the preceding claims which extends through the intermediate space (23) and connects the first wall opening (25) to the second wall opening (27),
- wherein at least one line (28) is led from the first space (21) through the bellows grommet (1) into the second space (22).

10. Motor vehicle (20) according to claim 9,
**characterized**
- **in that** the relevant cable (28) is an electrical cable.

## Revendications

1. Passe-câble à soufflet (1) pour le passage de lignes (28) dans un véhicule automobile (20),
- comportant un corps tubulaire (2) conçu comme un soufflet (3) en une matière plastique élastique,
- dans lequel le corps tubulaire (2) présente une pluralité de plis annulaires (4) qui font le tour respectivement dans une direction périphérique (U) du corps tubulaire (2) et qui se succèdent dans une direction longitudinale (X) du corps tubulaire (2),
- dans lequel le corps tubulaire (2) présente au moins un pli longitudinal (5) faisant saillie radialement vers l'intérieur, qui s'étend dans la direction longitudinale (X) du corps tubulaire (2) sur plusieurs ou tous les plis annulaires (4), **caractérisé en ce**
- **que** le corps tubulaire (2) présente deux plis longitudinaux (5) de ce type, qui sont diamétralement opposés l'un à l'autre,
- **que** le pli longitudinal (5) respectif est configuré de telle sorte qu'il relie élastiquement entre elles, dans le pli annulaire (4) respectif, deux sections de pli annulaire (6, 7) voisines dans la direction périphérique (U) du corps tubulaire (2), de telle sorte que les deux sections de pli annulaire (6, 7) s'étendent respectivement d'un pli longitudinal (5) à l'autre pli longitudinal (5) et le pli annulaire (4) respectif peut être déformé élastiquement entre un état initial, dans lequel le pli annulaire (4) respectif présente une première section transversale intérieure (8), et un état de déformation, dans lequel le pli annulaire (4) respectif présente une seconde section transversale intérieure (9), qui est plus grande que la première section transversale intérieure (8).

2. Passe-câble à soufflet (1) selon la revendication 1,
**caractérisé en ce**
- **que** le pli longitudinal (5) respectif forme, dans l'état initial, dans le pli annulaire (4) respectif, une zone de liaison (10) en forme de U ou en forme de V, qui relie élastiquement entre elles les deux sections de pli annulaire (6, 7),
- **que** la zone de liaison (10) est configurée de manière à faire saillie radialement vers l'intérieur dans l'état initial et à pouvoir être déplacée élastiquement radialement vers l'extérieur pour l'état de déformation.

3. Passe-câble à soufflet (1) selon la revendication 1 ou 2,
**caractérisé en ce**
- **que** les deux plis longitudinaux (5) sont configurés de telle sorte que, dans l'état initial, ils divisent la première section transversale intérieure (8) respective en deux zones de ligne (11, 12) parallèles pour le passage et/ou la réception séparés de lignes (28) et que, dans l'état de déformation, ils forment la seconde section transversale intérieure (9) respective comme zone de passage unitaire (13) pour le passage commun de lignes (28) pour les deux zones de ligne (11, 12).

4. Passe-câble à soufflet (1) selon l'une des revendications précédentes,
**caractérisé en ce**
- **que** le pli longitudinal (5) respectif s'étend sur tous les plis annulaires (4).

5. Passe-câble à soufflet (1) selon l'une des revendications précédentes,
**caractérisé en ce**
- **que** tous les plis annulaires (4) présentent à l'état initial la même première section transversale intérieure (8),
- **que** tous les plis annulaires (4) peuvent être élargis élastiquement pour l'état de déformation à la même seconde section transversale intérieure (9).

6. Passe-câble à soufflet (1) selon l'une des revendications précédentes,
**caractérisé en ce**
- **que** les plis annulaires (4) s'étendent d'une première extrémité longitudinale (16) du corps tubulaire (2) jusqu'à une seconde extrémité longitudinale (19) du corps tubulaire (2), de sorte que les sections transversales intérieures (8) des plis annulaires (4) définissent la section transversale intérieure du corps tubulaire (2),
- **que** le pli longitudinal (5) respectif s'étend de la première extrémité longitudinale (16) jusqu'à la seconde extrémité longitudinale (19), de sorte que le corps tubulaire (2) peut être élargi élastiquement sur toute sa longueur en ce qui concerne sa section transversale intérieure par déformation élastique des plis annulaires (4) entre l'état initial et l'état de déformation.

7. Passe-câble à soufflet (1) selon l'une des revendications précédentes,
**caractérisé en ce**
- **que** le passe-câble à soufflet (1) présente une première bride (14) qui est reliée à demeure à une première extrémité longitudinale (16) du corps tubulaire (2) par une première zone de transition (15) élastiquement déformable, de sorte que des lignes (28) peuvent être passées à travers la première bride (14) et à travers la première zone de transition (15).

8. Passe-câble à soufflet (1) selon la revendication 7,
**caractérisé en ce**
- **que** le passe-câble à soufflet (1) présente une seconde bride (17) qui est reliée à demeure à une seconde extrémité longitudinale (19) du corps tubulaire (2) par une seconde zone de transition (18) élastiquement déformable, de sorte que des lignes (28) peuvent être passées à travers la seconde bride (17) et à travers la seconde zone de transition (18).

9. Véhicule automobile (20),
- comportant un premier espace (21) qui est délimité par une première paroi (24) qui présente une première ouverture de paroi (25),
- comportant un second espace (22) qui est délimité par une seconde paroi (26) qui présente une seconde ouverture de paroi (27),
- comportant un espace intermédiaire (23) qui est agencé entre le premier espace (21) et le second espace (22) et qui est délimité par la première paroi (24) et la seconde paroi (26),
- comportant un passe-câble à soufflet (1) selon l'une des revendications précédentes, qui s'étend à travers l'espace intermédiaire (23) et qui relie la première ouverture de paroi (25) à la seconde ouverture de paroi (27),
- dans lequel au moins une ligne (28) est guidée depuis le premier espace (21) à travers le passe-câble à soufflet (1) dans le second espace (22).

10. Véhicule automobile (20) selon la revendication 9,
**caractérisé en ce**
- **que** la ligne (28) respective est un câble électrique.
